(19) Europäisches Patentamt
European Patent Office
Office européen des brevets

(11) **EP 2 687 747 A1**

(12) **EUROPEAN PATENT APPLICATION**
published in accordance with Art. 153(4) EPC

(43) Date of publication:
**22.01.2014 Bulletin 2014/04**

(51) Int Cl.:
*F16F 1/36* (2006.01)          *B32B 25/08* (2006.01)
*B32B 27/34* (2006.01)        *F16F 1/38* (2006.01)
*F16F 15/08* (2006.01)

(21) Application number: **11861251.4**

(22) Date of filing: **15.03.2011**

(86) International application number:
**PCT/JP2011/056094**

(87) International publication number:
**WO 2012/124061 (20.09.2012 Gazette 2012/38)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(71) Applicant: **Tokai Rubber Industries, Ltd.
Komaki-shi, Aichi 485-8550 (JP)**

(72) Inventor: **SUZUKI Junichiro
Komaki-shi
Aichi 485-8550 (JP)**

(74) Representative: **Müller-Boré & Partner
Patentanwälte PartG mbB
Grafinger Straße 2
81671 München (DE)**

(54) **VIBRATION ISOLATION DEVICE**

(57)     A vibration damping device includes a vulcanized rubber molding and a resin molding. The resin molding includes a sandwiched molding having a core layer and skin layers. The skin layers include a polyamide resin composition (A) containing a polyamide resin (a) and glass fibers (x) with a ratio (a/x) of 40/60 to 75/25 in mass. The core layer includes a polyamide resin composition (B) containing a polyamide resin (b) and glass fibers (y) with a ratio (b/y) of 35/65 to 60/40 in mass. A melt viscosity $\eta a$ of the composition (A) at 30°C higher than the melting point thereof and a shearing speed of 1000 s$^{-1}$ and a melt viscosity $\eta b$ of the polyamide resin composition (B) at 30°C higher than the melting point thereof and a shearing speed of 1000 s$^{-1}$ satisfy the expression of:

$$1 < (\log\eta a/\log\eta b) < 1.4.$$

FIG. 3

**Description**

BACKGROUND OF THE INVENTION

1. Technical Field

The present disclosure relates to a vibration damping device. More specifically, the present disclosure relates to a vibration damping device for an automobile, which is used for an engine mount of the automobile, and the like.

2. Related Art

In the related art, automobiles, rail vehicles, and the like are respectively provided with a various types of vibration damping devices to prevent vibration or impact from being transferred to stiff components. For the vibration damping devices, a large number of devices made of metal/rubber composites have been studied and developed and have been used in practice. Such devices have been formed by bonding vulcanized rubber to a metal-made support member. Recently, vibration damping devices made of resin/rubber composites have been widely used as those for automobiles, especially as engine mounts thereof, to reduce the weight and manufacturing cost of the vibration damping devices. In the vibration damping devices, a lightweight resin support member (e.g., a resin bracket) made of a resin material is used instead of a traditional metal support member (e.g., a metal bracket).

In the abovementioned vibration damping device made of a resin/rubber composite, among various kinds of resin materials, resin with excellent properties, such as heat resistance and durability, is particularly selected and used as the resin for the lightweight resin support member (e.g., the resin bracket). Presently, the use of a polyamide resin as the material for the resin support member has been regarded as effective (see, for example, Japanese Patent Application Laid-Open No. 2003-214494). The reasons therefor include that polyamide resin is superior in properties of reinforcement with glass fibers, mold-injection properties during processing, and chemical resistant properties and that the manufacturing cost of the vibration damping device can be lowered by using a polyamide resin, and the like.

SUMMARY OF THE INVENTION

A vibration damping device according to the present disclosure includes: a vulcanized rubber molding having a vibration isolating function; and a resin molding integrally formed with the vulcanized rubber molding and fixed to a base body while supporting the vulcanized rubber molding, wherein the resin molding includes a sandwiched molding having a core layer and skin layers respectively formed on a surface of the core layer and sandwiching the core layer, a polyamide resin composition (A) included in the skin layers includes a polyamide resin (a) and glass fibers (x), and a blend ratio (a/x) between the polyamide resin (a) and the glass fibers (x) is in a range of 40/60 to 75/25 in mass ratio, a polyamide resin composition (B) included in the core layer includes a polyamide resin (b) and the glass fibers (y), and a blend ratio (b/y) between the polyamide resin (b) and the glass fibers (y) is in a range of 35/65 to 60/40 in mass ratio, and a melt viscosity $\eta a$ of the polyamide resin composition (A) to be measured under conditions of a temperature 30°C higher than the melting point of the polyamide resin composition (A) and a shearing speed of 1000 s$^{-1}$ and a melt viscosity $\eta b$ of the polyamide resin composition (B) to be measured under conditions of a temperature 30°C higher than the melting point of the polyamide resin composition (B) and a shearing speed of 1000 s$^{-1}$ satisfy a relational expression of

$$1 < (\log \eta a / \log \eta b) < 1.4.$$

BRIEF DESCRIPTION OF THE DRAWINGS

FIG. 1 is an external perspective view illustrating an embodiment of a vibration damping device;
FIG. 2 is a front view illustrating the vibration damping device;
FIG. 3 is an enlarged partial cross-sectional view of sectioned part A surrounded by a circle in Figure 2, in a direction of arrow $\alpha$ in the vibration damping device of Fig. 1; and
FIG. 4 is a schematic view illustrating a part of a process of manufacturing the vibration damping device.

DETAILED DESCRIPTION OF THE INVENTION

In the following detailed description, for purpose of explanation, numerous specific details are set forth in order to provide a thorough understanding of the disclosed embodiments. It will be apparent, however, that one or more embodiments may be practiced without these specific details. In other instances, well-known structures and devices are schematically shown in order to simplify the drawing.

In association with power-heightening and upsizing of engines, engine mounts for automobiles have been required to be resistant to high temperature and high load. Thus, resin brackets have been designed to be thick for preventing the resin brackets from being deteriorated by heat and for improving the strength thereof. However, thickening of the resin brackets tends to cause internal defects, such as voids and cracks, due to resin crystallization, large mold shrinkage (i.e., sink), and the like. Further, the thickened resin brackets may cause high residual stress. Therefore, the use of a thickened resin bracket may lead to a decrease in strength of an entire vibration damping device.

The present embodiment provides a vibration damping device being superior in strength as a whole.

A vibration damping device includes: a vulcanized rubber molding having a vibration isolating function; and a resin molding integrally formed with the vulcanized rubber molding and fixed to a base body while supporting the vulcanized rubber molding, wherein the resin molding includes a sandwiched molding having a core layer and skin layers respectively formed on a surface of the core layer and sandwiching the core layer, a polyamide resin composition (A) included in the skin layers including a polyamide resin (a) and glass fibers (x) and a blend ratio (a/x) between the polyamide resin (a) and the glass fibers (x) is in a range of 40/60 to 75/25 in mass ratio and a polyamide resin composition (B) included in the core layer including a polyamide resin (b) and the glass fibers (y) and a blend ratio (b/y) between the polyamide resin (b) and the glass fibers (y) is in a range of 35/65 to 60/40 in mass ratio. A melt viscosity $\eta$a of the polyamide resin composition (A) to be measured under conditions of a temperature 30°C higher than the melting point of the polyamide resin composition (A) and a shearing speed of 1000 s$^{-1}$ and a melt viscosity $\eta$b of the polyamide resin composition (B) to be measured under conditions of a temperature 30°C higher than the melting point of the polyamide resin composition (B) and a shearing speed of 1000 s$^{-1}$ satisfy a relational expression of

$$1 < (\log\eta a / \log\eta b) < 1.4.$$

The present embodiment improves strength of an entire vibration damping device by using a resin molding (i.e., a resin bracket) that includes a sandwiched molding with a core layer and skin layers, where the core layer includes a specified polyamide resin composition (B), and the skin layers include a specified polyamide resin composition (A) and sandwich the core layer.

The vibration damping device of the present embodiment uses the resin molding (i.e., the resin bracket) that includes the sandwiched molding with the core layer and the skin layers, where the core layer includes the specified polyamide resin composition (B), and the skin layers include the specified polyamide resin composition (A) and sandwich the core layer. Therefore, an effect of improving the strength of the entire vibration damping device can be obtained. Further, the vibration damping device of the present embodiment is superior in heat resistance as well.

Further, when a content rate X of glass fibers (x) included in the polyamide resin composition (A) and a content rate Y of glass fibers (y) included in the polyamide resin composition (B) satisfy a specified relation therebetween, the strength of the entire vibration damping device is further improved.

Furthermore, when a volume ratio of the skin layers relative to the entire sandwiched molding (i.e., the resin molding) is in the range of 40 to 70%, the strength of the entire vibration damping device is particularly improved.

In the following, the vibration damping device according to the present embodiment will be described in detail. Here, the present disclosure is not limited to the present embodiment.

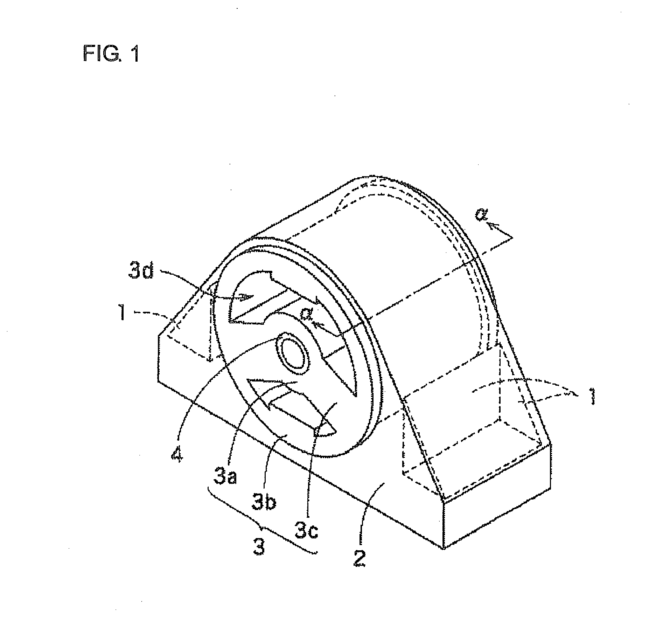

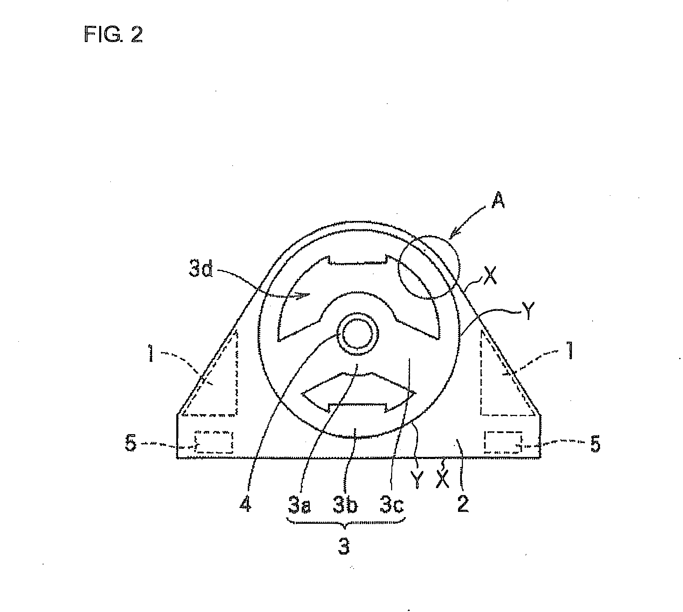

FIGS. 1 and 2 illustrate an engine mount (i.e., the present engine mount) as an exemplary vibration damping device according to the present embodiment. Here, the vibration damping device according to the present embodiment is not limited to the present engine mount. In the present engine mount, a rubber elastic body (i.e., a vulcanized rubber molding) 3 having a vibration isolating function is supported by a resin bracket (i.e., a resin molding) 2. That is, the present engine mount includes the generally cylindrical rubber elastic body 3, the resin bracket 2, and a cylindrical hardware fitting 4. The rubber elastic body 3 is intimately joined to the outer peripheral surface of the cylindrical hardware fitting 4. The resin bracket 2 covers the outer peripheral surface of the rubber elastic body 3 and is intimately joined to the outer peripheral surface of the rubber elastic body 3. The present engine mount is attached to a base body of a vehicle body and the like with the resin bracket 2.

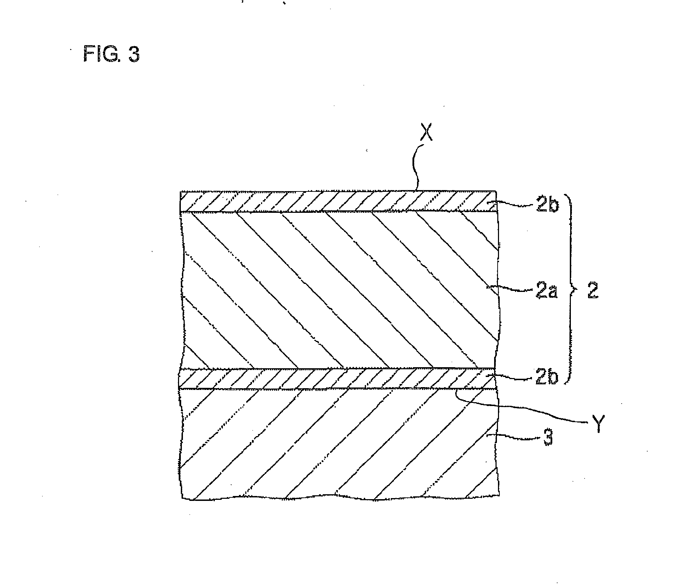

FIG. 3 is a partial cross-sectional view illustrating a sectioned part A, surrounded by a circle in FIG. 2, in a direction of arrow $\alpha$ (see FIG. 1). As illustrated in FIG. 3, in the present engine mount, the resin bracket 2 includes a sandwiched molding with a core layer 2a and skin layers 2b sandwiching the core layer 2a. The section from a front side (an outer peripheral side) X to an inner peripheral side Y (see FIG. 2) of the resin bracket 2 has a sandwich structure as illustrated in FIG. 3. In this structure, the core layer 2a is sandwiched by the skin layers 2b from both sides.

Describing in more detail for the present engine mount, concave portions 1 are respectively arranged at inclined portions on the opposite lateral sides of the resin bracket 2 as illustrated in FIGS. 1 and 2. With this structure, thickening of the inclined portions is prevented. Therefore, occurrence of internal defects due to the thickening is prevented. Further, nuts 5 are respectively embedded at four corners of a bottom portion (i.e., a lower portion in FIG. 2) of the resin bracket 2. The rubber elastic body 3 includes an inner cylindrical portion 3a, an outer cylindrical portion 3b and connection portions 3c. The inner cylindrical portion 3a is intimately joined to the cylindrical hardware fitting 4. The outer cylindrical portion 3b is intimately joined to the resin bracket 2. The inner cylindrical portion 3a and the outer cylindrical portion 3b are connected at two positions with the connection portions 3c. Hollow portions 3d are formed as being surrounded by the inner cylindrical portion 3a, the outer cylindrical portion 3b and the connection portions 3c.

The present engine mount is arranged as being sandwiched between the vehicle body (not illustrated) and an engine (i.e., a vibrating body, not illustrated). That is, a part of the resin bracket 2 (e.g., the bottom portion of the resin bracket 2 in FIG. 2) is fixed to the vehicle body (i.e., the base body). The fixing is performed by screwing bolts (not illustrated) into the nuts 5 embedded in the resin bracket 2. Then, the cylindrical hardware fitting 4 is fixed to an engine side bracket (not illustrated). In this manner, the present engine mount is arranged as being sandwiched between the vehicle body and the engine. This arrangement allows the present engine mount to exert the vibration isolating function. That is, vibration of the engine is hardly transmitted to the vehicle body because of being attenuated by the rubber elastic body 3 intimately joined to the cylindrical hardware fitting 4.

Here, the present engine mount satisfies following requirements (I) to (III). Details will be described later.

(I) The polyamide resin composition (A) included in the skin layers 2b includes polyamide resin (a) and the glass fibers (x) and the blend ratio (a/x) is in the range of 40/60 to 75/25 in mass ratio.

(II) The polyamide resin composition (B) included in the core layer 2a includes polyamide resin (b) and the glass fibers (y) and the blend ratio (b/y) is in the range of 35/65 to 60/40 in mass ratio.

(III) Melt viscosity $\eta a$ of the polyamide resin composition (A) to be measured under conditions of a temperature of 30°C higher than the melting point thereof and a shearing speed of 1000 s$^{-1}$ and melt viscosity $\eta b$ of the polyamide resin composition (B) to be measured under conditions of a temperature 30°C higher than the melting point thereof by and a shearing speed of 1000 s$^{-1}$ satisfy a relational expression of "$1 < (\log \eta a / \log \eta b) < 1.4$".

Next, formation materials and the like of the present engine mount will be described. First, the formation materials of the resin bracket 2 (i.e., the sandwiched molding) are described.

The polyamide resin composition (A) including the polyamide resin (a) and the glass fibers (x) is used as the formation material of the skin layers 2b of the resin bracket 2.

Meanwhile, the polyamide resin composition (B) including the polyamide resin (b) and the glass fibers (y) is used as the formation material of the core layer 2a of the resin bracket 2.

The polyamide resin (a) and the polyamide resin (b) are polyamides that include amide linkages in their main chains. Examples of such polyamides include Polyamide 6, Polyamide 46, Polyamide 66, Polyamide 610, Polyamide 612, Polyamide 116, Polyamide 11, Polyamide 12, Polyamide 92, Polyamide 99, Polyamide 912, Polyamide 1010, Polyamide 6I, Polyamide 6T, Polyamide 9T, Polyamide MXD6, Polyamide 6T/6I, Polyamide 6/6T, Polyamide 6/6I, Polyamide 66/6T, Polyamide 66/6I, a polyamide copolymer including at least two polyamide constituents (i.e., monomers) of which structures are different from one another among polyamide constituents constituting the polyamide resins, and mixtures thereof. Among them, from viewpoints of strength, formability and economy, polyamide used as the polyamide resin (a) and the polyamide resin (b) are Polyamide 6 or Polyamide 66 alone or in combination of Polyamide 6 and Polyamide 66.

Here, the glass fibers (x) and (y) are made of glass material, such as electrical glass (E-glass), chemical glass (C-glass), alkali glass (A-glass), high strength glass (S-glass), and alkali-resistant glass.

The glass fibers (x) and (y) are manufactured by a known method of manufacturing glass fibers. For example, the glass fibers (x) and (y) can be obtained by melt-spinning the glass material such as E-glass. The glass fibers (x) and (y) are preferably used in a state of so-called chopped strands if needed. The chopped strands are obtained by collecting glass fiber strands bound by a binder and cutting the glass fiber strands to have constant length. From a viewpoint of adhesiveness with matrix resin and uniform distribution, the binder may be a coupling agent, for example. Examples of the coupling agent include a silane coupling agent, a titanium-based coupling agent, and a zirconia-based coupling agent. Among them, the coupling agent is preferably the silane coupling agent, and is more preferably an amino-silane coupling agent or a glycidyl-silane coupling agent.

The average fiber length of the glass fibers (x) and (y) is preferably in the range of 0.1 to 5 mm, and more preferably in the range of 0.2 to 4 mm. When the average fiber length is too short, the reinforcement effect due to the glass fibers (x) and (y) is decreased. Accordingly, bending strength of the molding including the glass fibers (x) or the glass fibers (y) tends to be decreased under an ordinary temperature environment and a high temperature environment. When the average fiber length is too long, the breaking strain tends to be lessened.

Here, the average fiber length of the glass fibers denotes an average fiber length of glass fibers in the core layer 2a and the skin layers 2b of the sandwiched molding.

The fiber diameters of the respective glass fibers (x) and (y) are preferably in the range of 4 to 13 $\mu$m, and more preferably in the range of 7 to 11 $\mu$m. When the fiber diameter is too small, it becomes difficult to perform supplying of a constant amount of fibers during melt-kneading with the glass fibers (x) or the glass fibers (y) and distribution of fibers becomes insufficient. Therefore, mechanical strength of the molding including the glass fibers (x) or the glass fibers (y) tends to be decreased. When the fiber diameter is too large, the reinforcement effect due to the glass fibers (x) and (y) is decreased. Thus, the mechanical strength of the molding including the glass fibers (x) or the glass fibers (y) tends to be decreased.

Here, the fiber diameter denotes a glass fiber diameter of each glass filament (i.e., a monofilament).

As described above, the present engine mount satisfies the following requirements (I) to (III).

(I) The polyamide resin composition (A) included in the skin layers 2b includes polyamide resin (a) and the glass fibers (x) and the blend ratio (a/x) is in the range of 40/60 to 75/25 in mass ratio.

(II) The polyamide resin composition (B) included in the core layer 2a includes polyamide resin (b) and the glass fibers (y) and the blend ratio (b/y) is in the range of 35/65 to 60/40 in mass ratio.

(III) The melt viscosity $\eta$a of the polyamide resin composition (A) to be measured under conditions of a temperature of 30°C higher than the melting point thereof and a shearing speed of 1000 s$^{-1}$ and the melt viscosity $\eta$b of the polyamide resin composition (B) to be measured under conditions of a temperature of 30°C higher than the melting point thereof and at a shearing speed of 1000 s$^{-1}$ satisfy the relational expression or "1 < (log$\eta$a/log$\eta$b) < 1.4".

<Regarding requirement (I)>

The blend ratio (a/x) between the polyamide resin (a) and the glass fibers (x) in the polyamide resin composition (A) included in the skin layers 2b is in the range of 40/60 to 75/25 and preferably in the range of 45/55 to 75/25 in mass ratio. When the content rate of the glass fibers (x) is too low, the mechanical strength of the sandwiched molding under high temperature environment is decreased. When the content rate of the glass fibers (x) is too high, the breaking strain of the polyamide resin composition (A) is lessened. Thus, the mechanical strength of the sandwiched molding especially at an ordinary temperature is decreased.

<Regarding requirement (II)>

The blend ratio (b/y) between the polyamide resin (b) and the glass fibers (y) in the polyamide resin composition (B) included in the core layer 2a is in the range of 35/65 to 60/40 and preferably in the range of 40/60 to 55/45 in mass ratio. When the content rate of the glass fibers (y) is too low, the strength of the obtained polyamide resin composition (B) is decreased. Accordingly, the mechanical strength of the sandwiched molding under environment of an ordinary temperature and a high temperature is decreased. When the content rate of the glass fibers (y) is too high, distribution of the glass fibers (y) into the polyamide resin (b) is worsened. Thus, the breaking strain of the polyamide resin composition (B) is lessened. As a result, the mechanical strength of the sandwiched molding is decreased.

<Regarding requirement (III)>

A process of manufacturing the sandwiched molding of the present engine mount is approximately as follows. First, the polyamide resin composition (A) included in the skin layers 2b and the polyamide resin composition (B) included in the core layer 2a are heated and melted. Then, the polyamide resin composition (A) and the polyamide resin composition (B) are flowed concurrently or the polyamide resin composition (B) is flowed after the polyamide resin composition (A) is flowed. Subsequently, the polyamide resin composition (A) and the polyamide resin composition (B) are cooled and solidified. In this manner, the sandwiched molding can be obtained. Details will be described later. In the course of the above, it is preferable to prevent the skin layers 2b from becoming extremely thin and to prevent the core layer 2a at the inside from protruding as a part of the skin layers 2b being broken. To obtain such a sandwiched molding, the melt viscosity $\eta$a of the polyamide resin composition (A) and the melt viscosity $\eta$b of the polyamide resin composition (B) preferably satisfy the relational expression of "1 < (log$\eta$a/log$\eta$b) < 1.4", and more preferably satisfy a relational expression of "1.05 < (log$\eta$a/log$\eta$b) < 1.3". When the value of (log$\eta$a/log$\eta$b) is too large, the melt viscosity of the polyamide resin composition (B) included in the core layer 2a is decreased and flowing thereof is disturbed. Thus, the core layer 2a is formed unevenly. As a result, the mechanical strength of the entire sandwiched molding is decreased. On the other hand, when the value of (log$\eta$a/log$\eta$b) is too small, the skin layers 2b are thinned and are being pushed by flowing of the polyamide resin composition (B) having high melt viscosity in the core layer 2a. Therefore, the mechanical strength of the sandwiched molding is decreased especially at an ordinary temperature.

Here, it is preferable that the difference between the melting point of the polyamide resin composition (A) and the melting point of the polyamide resin composition (B) be as small as possible because satisfying of requirement (III) is facilitated. Specifically, it is particularly preferable for the difference to be 10°C or smaller.

In the present engine mount, the melt viscosity $\eta$a of the polyamide resin composition (A) is preferably in the range of 300 to 2000 Pa·s, and more preferably in the range of 300 to 1600 Pa.s. Further, the melt viscosity $\eta$b of the polyamide resin composition (B) is preferably in the range of 200 to 800 Pa.s, and more preferably in the range of 200 to 600 Pa.s.

In the present engine mount, the melt viscosity of a polyamide resin composition is denoted by a value measured under conditions of a temperature 30°C higher than the melting point of polyamide and a shearing speed of 1000 s$^{-1}$. More specifically, the melt viscosity is denoted by the value measured according to JIS K7199. Here, the melting point is denoted by a value measured by a differential scanning calorimeter (DSC) according to JIS K7121. In a case that two kinds of polyamide resin having different melting points are used, the higher melting point of the polyamide resin is adopted.

When requirements (I) to (III) are satisfied, the glass fibers in the skin layers 2b and the core layer 2a of the sandwiched molding are to be in an oriented state. The oriented state denotes a state in which a flowing direction of molten resin during mold processing and a fiber axis direction of glass fibers are matched. Thus, oriented area of the glass fibers is widened and orientation degree can be increased. As a result, strain resistance of the sandwiched molding against external force can be increased. Therefore, the mechanical strength of the obtained engine mount can be effectively increased.

In addition to above requirements (I) to (III), it is preferable that the present engine mount further satisfy following requirement (IV). In this case, the mechanical strength can be sufficiently ensured.

(IV) The content rate X of the glass fibers (x) included in the polyamide resin composition (A) and the content rate Y of the glass fibers (y) included in the polyamide resin composition (B) satisfy a relational expression of "X $\leq$ Y + 5".

<Regarding requirement (IV)>

In a case that the content rate X of the glass fibers (x) and the content rate Y of the glass fibers (y) satisfy relation of "X > Y + 5", the skin layers 2b are unlikely to strain when external force is applied. Here, since large stress is generated at the sandwiched molding, the sandwiched molding is likely to be broken. Therefore, when "X > Y + 5" is satisfied, it tends to be difficult to sufficiently ensure the mechanical strength as the sandwiched molding.

Further, in the present engine mount, the volume ratio of the skin layers 2b to the entire resin bracket 2 (i.e., the sandwiched molding) is preferably in the range of 40 to 70%, and more preferably in the range of 45 to 65%. When the volume ratio of the skin layers 2b is too low, the mechanical strength tends to be decreased. When the volume ratio of the skin layers 2b is too high, the mechanical strength tends to be remarkably decreased under an environment of high temperature, especially of 100°C or higher. By setting the volume ratio of the skin layers 2b into the range of 40 to 70% as described above, the skin layers 2b and the core layer 2a included in the resin bracket 2 can be set respectively to have a preferable thickness and/or an even thickness.

In the present engine mount, it is preferable that the polyamide resin composition (A) included in the skin layers 2b further include carbon black (c). When the carbon black (c) is included in the polyamide resin composition (A), crystallinity of the polyamide resin composition (A) is improved. Thus, the mechanical strength of the sandwiched molding can be increased especially under a high temperature environment. In addition, an effect of imparting weather resistance to the sandwiched molding can be also obtained.

Here, carbon black may be included not only in the polyamide resin composition (A) but also in the polyamide resin composition (B). However, by adding the carbon black only to the polyamide resin composition (A), boundaries between the skin layers 2b and the core layer 2a become distinct. Therefore, evenness of the skin layers 2b and the core layer 2a can be easily confirmed.

Carbon black (c) has a pH of preferably 8 or higher and more preferably 9 or higher. When the pH of the carbon black (c) is less than 8, deterioration of the polyamide resin is accelerated. As a result, the strength of the sandwiched molding may be decreased.

Here, the pH of carbon black is denoted by a pH of aqueous suspension obtained by dispersing one gram of carbon black in 20 ml of distilled water.

Further, an oxygen-containing group concentration in the carbon black (c) is preferably less than 0.5 mass% and more preferably less than 0.4 mass%. When the oxygen-group concentration is too high, the polyamide resin is deteriorated and adhesiveness between the polyamide resin and the glass fibers is inhibited. As a result, the strength of the sandwiched molding may be decreased.

Here, the oxygen-containing group concentration can be calculated from a decreased mass of carbon black after heating the carbon black at 950°C for 7 minutes.

A DBP absorption amount of the carbon black (c) is preferably in the range of 40 to 200 cm$^3$ per 100 grams, and more preferably in the range of 60 to 170 cm$^3$ per 100 grams. Further, a primary particle diameter of the carbon black (c) is preferably in the range of 10 to 40 nm, and more preferably in the range of 15 to 30 nm. When the DBP absorption amount or the primary particle diameter is out of the above range, distribution of the carbon black (c) is worsened. Therefore, the mechanical strength of the sandwiched molding may be decreased or the weather resistance thereof may be insufficient.

Here, the DBP absorption amount can be measured according to JIS K6217. The primary particle diameter can be obtained as an arithmetic mean diameter by using an electron microscope.

The content of the carbon black (c) in the polyamide resin composition (A) is preferably in the range of 0.1 to 3 parts by mass, and more preferably in the range of 0.2 to 2 parts by mass based on 100 parts by mass in total of the polyamide resin (a) and the glass fibers (x).

When the content of the carbon black (c) is too low, crystallinity improvement of the polyamide resin composition becomes insufficient. When the content is too high, the affinity between the polyamide resin composition and the glass fibers tend to be inhibited. Therefore, the mechanical strength of the sandwiched molding may be decreased due to decrease of the breaking strain of the polyamide resin composition.

In the present engine mount, it is preferable that a metal salt of a higher fatty acid (d) be further included in the polyamide resin composition (B) included in the core layer 2a. When the metal salt of the higher fatty acid is included, distribution of the polyamide resin and the glass fibers is improved. Further, the glass fibers included in the core layer 2a tend to be oriented in the flow direction at the vicinity of the skin layers 2b of the sandwiched molding. Therefore, the mechanical strength of the sandwiched molding can be increased.

The metal salt of the higher fatty acid (d) is preferably a metal salt of arachic acid (carbon number of 20), behenic acid (carbon number of 22), lignoceric acid (carbon number of 24), or montanic acid (carbon number of 28) or may be mixtures thereof. In particular, it is preferable to be a metal salt of behenic acid.

Here, examples of a metal for the metal salt of the higher fatty acid (d) include sodium, calcium, magnesium, lithium, aluminum, zinc, potassium, and barium. Among the above, sodium, calcium, and magnesium are preferable to be used because of their high generality.

The content of the metal salt of higher fatty acid (d) in the polyamide resin composition (B) is preferably in the range of 0.03 to 3 parts by mass, more preferably in the range of 0.1 to 2 parts by mass based on 100 parts by mass in total of the polyamide resin (b) and the glass fibers (y).

When the content of the metal salt of the higher fatty acid (d) is too low, the effect of improvement of the glass fibers in distribution and in orientation along the flow direction is decreased. Thus, the mechanical strength of the sandwiched molding may not be sufficiently increased. On the contrary, when the content of the metal salt of the higher fatty acid (d) is too high, a large amount of decomposed gas occurs during mold processing of the polyamide resin composition (B). As a result, voids are formed in the molding. Therefore, the mechanical strength of the sandwiched molding may be decreased.

Here, the polyamide resin composition (A) may not include a metal salt of the higher fatty acid. When the metal salt of the higher fatty acid is included in the polyamide resin composition (A), the melt viscosity of the polyamide resin composition (A) at the time of mold processing is remarkably decreased. Therefore, the shearing speed at the vicinity of a mold boundary face is decreased and orientation of the glass fibers is worsened. As a result, the mechanical strength of the sandwiched molding may be decreased.

Here, in the present embodiment, the polyamide resin composition (A) in the skin layers 2b and the polyamide resin composition (B) in the core layer 2a may include an additive if needed. Examples of the additive include a heat stabilizer, an antioxidant, a crystal nucleating agent, a pigment, a color protecting agent, a weatherproofing agent, and a plasticizing agent. The additives may be added to the skin layer-forming pellets and/or the core layer forming pellets separately before mold processing. Alternatively, the additives may be mixed with pellets at the time of mold processing.

Examples of the heat stabilizer or the antioxidant include hindered phenols, phosphorous compounds, hindered amines, sulfur compounds, copper compounds, alkali metal halogenides, and mixtures thereof. Further, for example, the crystal nucleating agent can be talc.

In a case that the above additives are added to the polyamide resin composition (A) which is included in the skin layers 2b, the total content of the additives is preferably 5 mass% or lower based on the total amount of the polyamide resin composition (A) from a viewpoint of preventing decease of the mechanical strength of the polyamide resin.

Further, in a case that the above additives are added to the polyamide resin composition (B) which is included in the core layer 2a, the total content of the additives is preferably 5 mass% or lower relative to the total amount of the polyamide resin composition (B) from a viewpoint of preventing decease of the mechanical strength of the polyamide resin.

Furthermore, the polyamide resin composition (A) in the skin layers 2b and the polyamide resin composition (B) in the core layer 2a may include an additive if required, such as a flame retardant and a reinforcing agent other than glass fibers. The additives may be added to the skin layer- forming pellets and/or the core layer forming pellets separately before mold processing. Alternatively, the additives may be mixed with pellets at the time of mold processing.

Examples of the reinforcing agent other than glass fibers include talc, mica, and wollastonite. Further, examples of the flame retardant include a halogenated flame retardant, a phosphorous flame retardant, and a non-halogenated flame retardant such as hydroxide magnesium and hydroxide aluminum.

In a case that the additive such as the reinforcing agent other than glass fibers is added to the polyamide resin composition (A) included in the skin layers 2b, the total content of the additive is preferably in the range of 10 to 30 mass% based on the total amount of the polyamide resin composition (A) so as to exert a function of the additive as a reinforcing agent or a flame retardant.

Further, in a case that the additive such as the reinforcing agent other than glass fibers is added to the polyamide resin composition (B) included in the core layer 2a, the total content of the additive is preferably in the range of 10 to 30 mass% based on the total amount of the polyamide resin composition (B) so as to exert a function of the additive as a reinforcing agent or a flame retardant.

Furthermore, it is also possible to add another thermoplastic resin other than the polyamide resin (a) and (b) (hereinafter, called other thermoplastic resin) to the polyamide resin composition (A) included in the skin layers 2b and the polyamide resin composition (B) included in the core layer 2a.

Examples of the other thermoplastic resin include elastomers (such as polybutadiene, butadiene/styrene copolymers, acrylic rubber, ethylene/propylene copolymers, ethylene/propylene/butadiene copolymers, natural rubber, chlorinated butyl rubber, and chlorinated polyethylene), denaturation thereof with maleic anhydride or the like, styrene/ maleic-anhydride copolymers, styrene/phenyl-maleimide copolymers, polyethylenes, polypropylenes, polystyrenes, syndiotactic polystyrenes, butadiene/acrylonitrile copolymers, polyvinyl chloride, polyethylene terephthalate, polyacetal, polyvinylidene fluoride, polysulfone, polyphenylene sulfide, polyether sulfone, phenoxy resin, polyphenylene ether, polymethylmethacrylate, polyether ketone, polycarbonate, polytetrafluoroethylene, and polyallylate.

The other thermoplastic resin may be included in the skin layer- forming pellets and may be included in the core layer forming pellets. Further, the other thermoplastic resin may be mixed with the pellets at the time of molding.

In a case that the other thermoplastic resin is included in the polyamide resin composition (A) included in the skin layers 2b, the content of the other thermoplastic resin is preferably 10 mass% or lower and more preferably 5 mass% or lower based on the total amount of the polyamide resin composition (A) from a viewpoint of preventing a decrease in the mechanical characteristics of the polyamide resin.

Further, in a case that the other thermoplastic resin is included in the polyamide resin composition (B) included in the core layer 2a, the content of the other thermoplastic resin is preferably 10 mass% or lower, more preferably 5 mass% or lower based on the total amount of the polyamide resin composition (B) from a viewpoint of preventing a decrease in the mechanical characteristics of the polyamide resin.

The sandwiched molding such as the resin bracket 2 in the present engine mount can be manufactured by supplying the skin layer forming pellets and the core layer-forming pellets respectively as a primary material and a secondary material in a so-called sandwich molding method.

For example, a preferable method of manufacturing the skin layer forming pellets or the core layer-forming pellets is a method of kneading by using a double-axis extrusion kneader. Describing in more detail, the polyamide resin (a) or (b) is fed to an upstream portion of a cylinder and glass fiber (x) or (y) is side-fed to an intermediate portion of the cylinder. Subsequently, the discharged strand-shaped resin composition is drawn from a dice. The strand-shaped resin composition is cut with a pelletizer after being cooled and solidified, so that the pellets can be obtained. Such a method is economically preferable. When the abovementioned additives are added, the additives may be added to the skin layer forming pellets and/or the core layer-forming pellets previously and separately. Alternatively, the additives may be mixed with the pellets at the time of molding.

Examples of the sandwich molding method include a sandwich molding method using an injection molding method.

Description is specifically given on a case that the skin layer forming pellets are used as the primary material and the core layer-forming pellets are used as the secondary material in the sandwich forming method using the injection molding method. First, the molten primary material is injected into a mold. Then, with a lapse of time, the molten secondary material is injected to the mold. At that time, injection of the primary material may be halted or the primary material may be injected along with the secondary material. Subsequently, injection of the secondary material is halted and the primary material is injected (once again), and then, the gate is closed with the primary material. As a result, the secondary material flows within the molten primary material in the mold. Thus, the primary material is flattened out to form the skin layers 2b. Since the gate is closed with the primary material as well, the primary material is formed on the entire surface of the molding. Lastly, the material in the mold is sufficiently cooled and solidified. In this manner, the sandwiched molding can be obtained. The sandwiched molding obtained in this manner has a sandwich structure of the primary material (i.e., the skin layers 2b) and the secondary material (i.e., the core layer 2a), where the primary material sandwiches (or wraps) the secondary material.

Next, the formation material of the rubber elastic body 3 of the present engine mount will be described.

It is preferable that rubber elastic body material (i.e., a rubber composition) for forming the rubber elastic body 3 have an excellent vibration isolating function. Examples of the rubber composition include natural rubber (NR), butadiene rubber (BR), styrene butadiene rubber (SBR), isoprene rubber (IR), acrylonitrile butadiene rubber (NBR), carboxyl denatured NBR, chloroprene rubber (CR), ethylene propylene rubber (EPM, EPDM), maleic denatured EPM, butyl rubber (IIR), halogenated IIR, chlorosulfonated polyethylene (CSM), fluoro-rubber (FKM), acrylic rubber, and epichlorohydrin rubber. These are used alone or in combination of two or more.

Here, the rubber composition is appropriately blended, if needed, with a reinforcing agent such as carbon black, a vulcanizing agent, a vulcanizing accelerator, a lubricating agent, an auxiliary agent, a plasticizing agent, and an anti-aging agent.

Next, a process of manufacturing the present engine mount illustrated in FIGS. 1 to 3 will be described. First, the cylindrical hardware fitting 4 is prepared and adhesive or the like is applied to the outer peripheral surface (i.e., a portion to be in close contact with the rubber elastic body 3). Subsequently, the cylindrical hardware fitting 4 is placed at a predetermined position in the mold for the rubber elastic body 3. Then, rubber elastic body material is injected into the mold. Subsequently, the rubber elastic body material is vulcanized under predetermined conditions (e.g., at 150°C for 30 min). Thus, the rubber elastic body 3 integrated with the cylindrical hardware fitting 4 can be obtained.

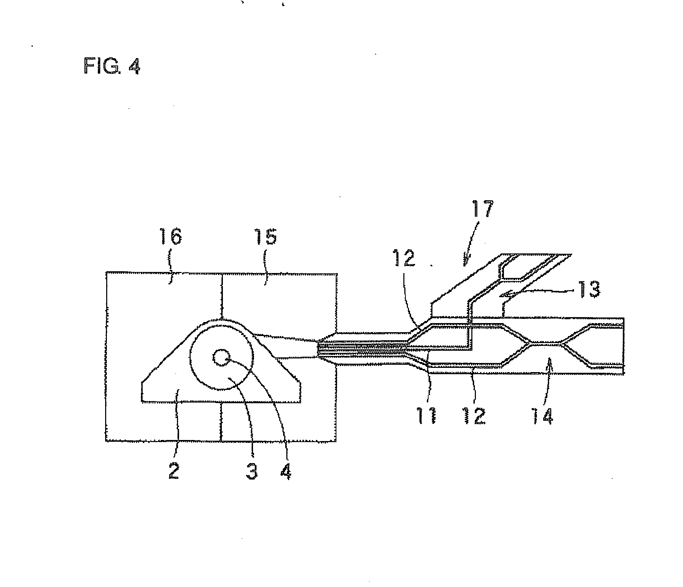

Subsequently, as illustrated in a structural view of FIG. 4, a mold machine (i.e., an injection mold machine for sandwich molding) 17 is prepared for molding the resin bracket 2. The mold machine 17 is provided with a nozzle having a double-structure with a core layer nozzle 11 and a skin layer nozzle 12, where the skin layer nozzle 12 is coaxially arranged outside the core layer nozzle 11. Then, adhesive or the like is applied to an outer peripheral portion (i.e., a portion to be in close contact with the resin bracket 2) of the rubber elastic body 3 in FIG. 2. Subsequently, these structural components and the nuts 5 are placed in positions in molds 15 and 16 illustrated in FIG. 4. In FIG. 4, the mold 15 serves as a fixed mold and the mold 16 serves as a movable mold. Then, the pellets for the resin composition (A) being the skin layer material are injected into cavities (i.e., mold space) of the molds 15 and 16 from a skin layer cylinder 14 via the skin layer nozzle 12. As a result, the skin layers 2b are formed at an inner wall face constituting the cavities of the molds 15 and 16 and the outer peripheral portion of the rubber elastic body 3. Immediately thereafter, the pellets for the resin composition (B) being the core layer material are injected into the cavities of the molds 15 and 16 from a core layer cylinder 13 via the core layer nozzle 11. As a result, the core layer 2a is formed while being integrated with the skin layers 2b. Thus, the molding is completed. Subsequently, the movable mold 16 is detached from the fixed mold 15. In this manner, the present engine mount as illustrated in FIG. 2 can be obtained. A section of the resin bracket 2 of the present engine mount has a sandwich structure as illustrated in FIG. 3. In this structure, the outer peripheral portion of the core layer 2a is covered with the skin layer 2b.

Here, the order of manufacturing the respective members in the process of manufacturing is not limited to the above manufacturing example. For example, it is also possible to apply adhesive to the resin bracket 2 after molding the resin bracket 2 and to vulcanize and mold the rubber elastic body 3 thereafter.

In the present engine mount, the thickness of the core layer 2a of the resin bracket 2 is normally in the range of 2 to 20 mm, and preferably in the range of 2.5 to 12 mm. The thickness of the skin layers 2b is normally in the range of 0.5 to 8 mm, and preferably in the range of 1 to 6 mm.

In the above, description has been given on the present engine mount which is an example of the vibration damping device according to the present embodiment. The vibration damping device according to the present embodiment may be used in applications other than an engine mount. For example, the vibration damping device according to the present embodiment may be used for a transmission mount, a body mount, a cab mount, a member mount, a differential mount, a con rod, a torque rod, a strut bar cushion, a center bearing support, a torsional damper, a steering rubber coupling, a tension rod bush, a bush, a bound stopper, an FF engine roll stopper, a muffler hanger, a stabilizer link rod, a radiator support, a control arm, a suspension arm, and the like for vehicles such as automobiles. Further, the vibration damping device according to the present embodiment may be used as a vibration damping device for other than vehicles such as automobiles. Shapes of the vibration damping device according to the present embodiment may be appropriately modified in accordance with an application.

Examples

Next, examples of the vibration damping device according to the present embodiment will be described along with comparative examples. However, the vibration damping device according to the present embodiment is not limited to the examples. To begin with, before manufacturing the examples and the comparative examples, following materials were prepared as the skin layer material and the core layer material for the resin bracket.

[Polyamide resin (a) and (b)]

<PA-1>

PA6 (A1015 manufactured by Unitika Ltd.), Melting point 220°C, Melt viscosity 40 Pa·s

<PA-2>

PA66 (E2001 R manufactured by Unitika Ltd.), Melting point 260°C, Melt viscosity 40 Pa·s

<PA-3>

PA66 (A125 manufactured by Unitika Ltd.), Melting point 260°C, Melt viscosity 80 Pa·s

<PA-4>

PA66 (A142 manufactured by Unitika Ltd.), Melting point 260°C, Melt viscosity 600 Pa·s
The above value of each melt viscosity was obtained through measurement under conditions of a temperature 30°C higher than each melting point and a shearing speed of $1000\ s^{-1}$.

[Glass fibers (x) and (y)]

CS3H459 manufactured by Nitto Boseki Co., Ltd. (Glass fiber diameter 10 μm, Fiber length 3 mm)

[Carbon black (c)]

#4000B manufactured by Mitsubishi Chemical Corporation (pH 10, Oxygen-group concentration 0.3 mass%, DBP absorption amount 102 $cm^3$ per 100 grams, Primary particle diameter 24 nm)

[Metal salt of higher fatty acid (d)]

Sodium behenate (NS-7 manufactured by Nitto Kasei Kogyo K.K.)
Next, the pellets of the skin layer material (PS) and the pellets of the core layer material (PC) were prepared by using the above materials.

[Manufacturing example 1]

A co-rotation twin screw extruder (TEM37BS manufactured by Toshiba Machine Co., Ltd.) was used for preparing the pellets. A main hopper for feeding main raw material and a continuous quantitative feeder (manufactured by Kubota Corporation) for quantitatively feeding the main raw material to the main hopper were disposed at an upstream portion of the co-rotation twin screw extruder. A side-feeder for feeding auxiliary material was disposed at an intermediate portion of the extruder. Further, a cooling water bath and a pelletizer were disposed at a downstream portion of the extruder.
In manufacturing example 1, the extrusion temperature of the co-rotation twin screw extruder was set in the range of 270 to 300°C. Polyamide resin (PA66) PA-3, polyamide resin (PA66) PA-4 and carbon black (c) being the main raw material were fed by the continuous quantitative feeder to the main hopper disposed at the upstream portion of the co-rotation twin screw extruder to be respectively 45 parts by mass, 10 parts by mass and 0.5 parts by mass. Meanwhile, the glass fibers (x) were fed to the side feeder disposed at the intermediate portion of the co-rotation twin screw extruder to be 45 parts by mass. Then, the PA66 and the glass fibers were kneaded with melting at a screw rotation speed of 300 rpm. The blend ratio between the PA66 and the glass fibers was adjusted by controlling the ratio between feeding speed of the main raw material due to the continuous quantum feeding device and side feeding speed of the auxiliary material due to the side feeder. Then, the strand-shaped resin composition was drawn while the resin composition including the PA66 and the glass fibers was discharged from the dice at the discharge amount of 35 kg/h. Further, the resin composition was cooled and solidified as being passed through the cooling water bath. Subsequently, the pellets PS-1 having pellet length of 3 mm were obtained by cutting the resin composition with the pelletizer.
Resin temperature of the resin composition at the time when being discharged from the dice was 290°C. The melt viscosity of the PS-1 was measured under conditions of 290°C and $1000\ s^{-1}$. As a result, the melt viscosity of the PS-1 was 700 Pa.s. The result is indicated in following Table 1.

[Manufacturing examples 2 to 20]

Here, the pellets were prepared according to manufacturing example 1 other than that constituents indicated in following Tables 1 and 2 were blended in rates indicated in the Tables.

[Table 1]

(Parts by mass)

| Polyamide resin composition (A) | | Manufacturing example 1 | Manufacturing example 2 | Manufacturing example 3 | Manufacturing example 4 | Manufacturing example 5 | Manufacturing example 6 | Manufacturing example 7 | Manufacturing example 8 | Manufacturing example 9 | Manufacturing example 10 |
|---|---|---|---|---|---|---|---|---|---|---|---|
| | | PS-1 | PS-2 | PS-3 | PS-4 | PS-5 | PS-5 | PS-7 | PS-8 | PS-9 | PS-10 |
| Polyamide resin (a) | PA-1 | - | - | 10 | - | - | - | - | - | - | - |
| | PA-2 | - | 10 | - | - | - | - | - | - | - | - |
| | PA-3 | 45 | 45 | 25 | 40 | 50 | 45 | 40 | 60 | 60 | 35 |
| | PA-4 | 10 | 10 | 15 | 5 | 20 | 10 | - | 20 | 15 | - |
| Glass fibers (x) | | 45 | 35 | 50 | 55 | 30 | 45 | 60 | 20 | 25 | 65 |
| Carbon black (c) | | 0.5 | 1 | 0.2 | 0.1 | 0.4 | - | 0.2 | 0.2 | 0.2 | 0.2 |
| Melt viscosity $\eta a$ (Pa·s) | | 700 | 360 | 1350 | 730 | 640 | 670 | 690 | 400 | 380 | 780 |
| $\log \eta a$ | | 2.85 | 2.56 | 3.13 | 2.86 | 2.81 | 2.83 | 2.84 | 2.6 | 2.58 | 2.89 |
| Temperature of $\eta a$ measurement (°C) | | 290 | 290 | 290 | 290 | 290 | 290 | 290 | 290 | 290 | 290 |

[Table 2]

(Parts by mass)

| Polyamide resin composition (B) | | Manufacturing example 11 | Manufacturing example 12 | Manufacturing example 13 | Manufacturing example 14 | Manufacturing example 15 | Manufacturing example 16 | Manufacturing example 17 | Manufacturing example 18 | Manufacturing example 19 | Manufacturing example 20 |
|---|---|---|---|---|---|---|---|---|---|---|---|
| | | PC-1 | PC-2 | PC-3 | PC-4 | PC-5 | PC-6 | PC-7 | PC-8 | PC-9 | PC-10 |
| Polyamide resin (b) | PA-1 | - | - | - | - | - | 10 | - | 10 | 10 | - |
| | PA-2 | 45 | - | 35 | 30 | 45 | 20 | 30 | 30 | 35 | 30 |
| | PA-3 | - | 45 | - | 25 | - | - | 35 | - | - | 30 |
| | PA-4 | - | 5 | - | - | - | - | - | - | - | - |
| Glass fibers (y) | | 55 | 50 | 65 | 45 | 55 | 70 | 35 | 60 | 55 | 40 |
| Metal salt of higher fatty acid (d) | | 0.2 | 0.2 | 1 | 0.2 | - | 0.2 | 0.2 | 0.2 | 0.1 | 0.2 |
| Melt viscosity $\eta b$ (Pa·s) | | 350 | 550 | 410 | 300 | 360 | 450 | 270 | 250 | 150 | 250 |
| $\log\eta b$ | | 2.54 | 2.74 | 2.61 | 2.48 | 2.56 | 2.65 | 2.43 | 2.40 | 2.18 | 2.40 |
| Temperature of $\eta b$ measurement (°C) | | 290 | 290 | 290 | 290 | 290 | 290 | 290 | 290 | 290 | 290 |

EP 2 687 747 A1

The melt viscosity of each polyamide resin composition was measured according to the following rules by using the pellets of manufacturing examples obtained as described above. Results thereof are listed in above Tables 1 and 2.

[Melt viscosity of polyamide resin composition]

The melt viscosity was measured by a measuring method according to JIS K7199. Resin pellets were placed in a cylinder having an orifice diameter of 1 mm and being heated at a temperature 30°C higher than the melting point of the polyamide resin. Then, the resin pellets were preheated for 3 minutes. Subsequently, the melt viscosity was measured at a shearing speed of 1000 $s^{-1}$.

Here, the melting point of the polyamide resin composition was measured with a DSC according to JIS K7121. In a case that plural different melting points were detected, the highest melting point is employed.

Next, a vibration damping device (i.e., an engine mount) including the rubber elastic body (i.e., the vulcanized rubber molding) and the resin bracket (i.e., the resin molding) which are integrated was manufactured as described below by using the pellets (PC) of the skin layer material which are materials for forming the resin bracket.

[Example 1]

(Preparation of rubber elastic body material)

One hundred parts by mass of natural rubber is blended with 35 parts by mass of HAF carbon black (SEAST 3 manufactured by Tokai Carbon Co., Ltd.), 5 parts by mass of zinc oxide (Zinc Oxide Type-I manufactured by Sakai Chemical Industry Co., Ltd.), 2 parts by mass of stearic acid (LUNAC S-30 manufactured by Kao Corporation), 0.7 parts by mass of volcanizing accelerator (SOXINOL CZ manufactured by Sumitomo Chemical Co., Ltd.) and 2 parts by mass of sulfur (SULFAX 200S manufactured by Tsurumi Chemical Industry Co., Ltd.). The rubber elastic body material (i.e., the rubber composition) was prepared by kneading the formulation formed as described above by using a kneader and a mixing mill.

(Manufacture of vibration damping device)

To manufacture the present engine mount as illustrated in FIGS. 1 to 3, a cylindrical hardware fitting made of iron with an outer diameter of 24 mm, an inner diameter of 12 mm and a length of 60 mm was prepared. Then, adhesive was applied to the outer peripheral surface (i.e., a portion to be in close contact with the rubber elastic body) of the cylindrical hardware fitting. Subsequently, the cylindrical hardware fitting is placed at a predetermined position in a mold for the rubber elastic body. Then, the rubber elastic body material was injected into the mold. Subsequently, the rubber elastic body material was vulcanized at 150°C for 30 minutes. Thus, the rubber elastic body integrated with the cylindrical hardware fitting was obtained. Next, the mold machine (i.e., the injection molding machine for sandwich molding) (J180AD-2M manufactured by The Japan Steel Works, Ltd.) for resin bracket molding was prepared as illustrated in FIG. 4. Then, adhesive was applied to the outer peripheral surface (i.e., a portion to be in close contact with the resin bracket) of the rubber elastic body. Subsequently, the resultant was placed at a predetermined position in the mold along with the nuts. Then, PS-1, which is the skin layer material (pellets), was injected into the cavity of the mold from the skin layer cylinder via the skin layer nozzle. Subsequently, PC-1, which is the core layer material (pellets), was injected into the cavity of the mold from the core layer cylinder via the core layer nozzle. Here, the cylinder temperature was 290°C and the mold temperature was 80°C. Thus, the core layer was molded. In this manner, the vibration damping device (i.e., the engine mount) including the rubber elastic body (i.e., the vulcanized rubber molding) and the resin bracket (i.e., the resin molding) integrated with the rubber elastic body was manufactured. The section of the resin bracket (e.g., depth 50 mm, width 120 mm, and height 100 mm) of the vibration damping device (i.e., the engine mount) has the sandwich structure as illustrated in FIG. 3. In this structure, the outer circumference of the core layer (e.g., thickness 4 mm) is covered with the skin layer (e.g., thickness 3 mm).

[Examples 2 to 16 and comparative example 1 to 8]

(Preparation of rubber elastic body material)

The rubber elastic body material (i.e., the rubber composition) was prepared similarly to example 1.

(Manufacture of vibration damping device)

The vibration damping device was manufactured according to example 1 except for variation of combination between the pellets of the skin layer material (PS) and the pellets of the core layer material (PC) as indicated in following Tables 3 to 5.

The section of the resin bracket (e.g., depth 50 mm, width 120 mm, and height 100 mm) of the vibration damping device (i.e., the engine mount) has the sandwich structure. In this structure, the outer circumference of the core layer (e.g., thickness 4 mm) is covered with the skin layer (e.g., thickness 3 mm).

[Table 3]

|  | Example 1 | Example 2 | Example 3 | Example 4 | Example 5 | Example 6 | Example 7 | Example 8 |
|---|---|---|---|---|---|---|---|---|
| Skin layer (Pellets) | PS-1 | PS-1 | PS-1 | PS-2 | PS-7 | PS-9 | PS-1 | PS-1 |
| Core layer (Pellets) | PC-1 | PC-3 | PC-10 | PC-1 | PC-1 | PC-1 | PC-8 | PC-4 |
| $\log \eta a/\log \eta b$ | 1.12 | 1.09 | 1.19 | 1.01 | 1.12 | 1.02 | 1.19 | 1.15 |
| x/y+5 | 45/60 | 45/70 | 45/45 | 35/60 | 60/60 | 25/60 | 45/65 | 45/50 |
| Breaking strength (kN) | 46 | 42 | 41 | 42 | 41 | 41 | 45 | 43 |
| Volume ratio of skin layer (%) | 60 | 60 | 60 | 60 | 60 | 60 | 60 | 60 |

[Table 4]

|  | Example 9 | Example 10 | Example 11 | Example 12 | Example 13 | Example 4 | Example 15 | Example 16 |
|---|---|---|---|---|---|---|---|---|
| Skin layer (Pellets) | PS-4 | PS-1 | PS-1 | PS-1 | PS-6 | PS-4 | PS-1 | PS-1 |
| Core layer (Pellets) | PC-1 | PC-5 | PC-1 | PC-1 | PC-1 | PC-4 | PC-1 | PC-1 |
| $\log \eta a/\log \eta b$ | 1.13 | 1.11 | 1.12 | 1.12 | 1.11 | 1.15 | 1.12 | 1.12 |
| x/y+5 | 55/60 | 45/60 | 45/60 | 45/60 | 45/60 | 55/50 | 45/60 | 45/60 |
| Breaking strength (kN) | 44 | 45 | 41 | 40 | 46 | 40 | 44 | 42 |
| Volume ratio of skin layer (%) | 60 | 60 | 35 | 75 | 60 | 60 | 40 | 70 |

[Table 5]

| | Comparative example 1 | Comparative example 2 | Comparative example 3 | Comparative example 4 | Comparative example 5 | Comparative example 6 | Comparative example 7 | Comparative example 8 |
|---|---|---|---|---|---|---|---|---|
| Skin layer (Pellets) | PS-10 | PS-8 | PS-1 | PS-2 | PS-2 | PS-3 | PS-1 | - |
| Core layer (Pellets) | PC-1 | PC-1 | PC-6 | PC-7 | PC-2 | PC-9 | - | PC-1 |
| $\log\eta a / \log\eta b$ | 1.14 | 1.02 | 1.08 | 1.05 | 0.93 | 1.44 | - | - |
| x/y+5 | 65/60 | 20/60 | 45/75 | 35/40 | 35/55 | 50/60 | - | - |
| Breaking strength (kN) | 36 | 36 | 38 | 34 | 38 | 37 | 36 | 37 |
| Volume ratio of skin layer (%) | 60 | 60 | 60 | 60 | 60 | 60 | - | - |

Characteristics of the vibration damping devices of examples and comparative examples obtained as described above were measured according to the following rules. Measurement results were indicated in the above Tables 3 to 5 as well.

[Breaking strength]

The vibration damping device was fixed to a jig. A metal round bar was inserted into the cylindrical hardware fitting of the vibration damping device. The inserted round bar was pulled upward in FIG. 2 at speed of 20 mm/min until the vibration damping device was broken. Then, under environment of ordinary temperature (i.e., 20°C), the load at the time of breakage was measured by using a tensile test machine (Auto-Graph AG-IS manufactured by Shimadzu Corporation).

[Volume ratio of skin layer]

Injection volume of the skin layers (i.e., the primary material) and injection volume of the core layer (i.e., the secondary material) of the sandwich molding were measured with the injection molding machine. The volume ratio of the skin layers (i.e., the primary material) was obtained as follows. That is, the total volume was calculated as an addition of the injection volume of the primary material and the injection volume of the secondary material which were measured by the injection molding machine. The ratio of the injection volume of the primary material relative to the total volume was obtained as the volume ratio of the primary material.

Here, the injection volume of the primary material and the injection volume of the secondary material were calculated respectively as a product of screw movement distance during injection molding and cylinder section area. Further, the screw movement distance during injection molding was calculated as a difference between the screw position at the time of measurement completion and the screw position at the time of injection completion. The volume ratio of the skin layers is preferably in the range of 40 to 70% of the entire sandwiched molding.

Followings was proved through the results of tables 3 to 5. Examples 1 to 16 respectively use the resin bracket including a sandwiched molding with the core layer including a specified polyamide resin composition (B) and skin layers including a specified polyamide resin composition (A) to sandwich the core layer. Therefore, the breaking strength of every example was excellent.

On the other hand, comparative example 1 used a material containing an excessive amount of glass fibers (x) of the polyamide resin composition (A) in the skin layers. The breaking strength thereof was inferior.

Comparative example 2 used a material containing an insufficient amount of glass fibers (x) of the polyamide resin composition (A) in the skin layers. The breaking strength thereof was inferior.

Comparative example 3 used a material containing an excessive amount of glass fibers (y) of the polyamide resin composition (B) in the core layer. The breaking strength thereof was inferior.

Comparative example 4 used a material containing an insufficient amount of glass fibers (y) of the polyamide resin composition (B) in the core layer. The breaking strength thereof was inferior.

In comparative example 5, the value of $(\log \eta a / \log \eta b)$ was too small. The breaking strength thereof was inferior.

In comparative example 6, the value of $(\log \eta a / \log \eta b)$ was too large. The breaking strength thereof was inferior.

In comparative example 7, the resin bracket was constituted only with the skin layer-forming pellets. The breaking strength was inferior.

In comparative example 8, the resin bracket was constituted only with the core layer forming pellets. The breaking strength was inferior.

The above examples indicate specific embodiments of the present disclosure. Here, since the above examples are simply exemplary, the disclosure should not be construed in a limited manner. Further, any modification falling in the scope of equivalence of any one of the claims is still within the present disclosure.

The vibration damping device according to the present disclosure is preferably used as a vibration damping device for vehicles such as automobiles, such as an engine mount, a transmission mount, a body mount, a cab mount, a member mount, a differential mount, a con rod, a torque rod, a strut bar cushion, a center bearing support, a torsional damper, a steering rubber coupling, a tension rod bush, a bush, a bound stopper, an FF engine roll stopper, a muffler hanger, a stabilizer link rod, a radiator support, a control arm, and a suspension arm to be used in vehicles such as automobiles. Further, the vibration damping device according to the present disclosure may be used as a vibration damping device for other than vehicles such as automobiles.

The foregoing detailed description has been presented for the purposes of illustration and description. Many modifications and variations are possible in light of the above teaching. It is not intended to be exhaustive or to limit the subject matter described herein to the precise form disclosed. Although the subject matter has been described in language specific to structural features and/or methodological acts, it is to be understood that the subject matter defined in the appended claims is not necessarily limited to the specific features or acts described above. Rather, the specific features and acts described above are disclosed as example forms of implementing the claims appended hereto.

**Claims**

1. A vibration damping device, comprising:

   a vulcanized rubber molding having a vibration isolating function; and
   a resin molding integrally formed with the vulcanized rubber molding and capable of being fixed to a base body while supporting the vulcanized rubber molding,
   wherein the resin molding includes a sandwiched molding having a core layer and skin layers respectively formed on a surface of the core layer and sandwiching the core layer,
   wherein a polyamide resin composition (A) included in the skin layers includes a polyamide resin (a) and glass fibers (x), and a blend ratio (a/x) between the polyamide resin (a) and the glass fibers (x) is in a range of 40/60 to 75/25 in mass ratio,
   wherein a polyamide resin composition (B) included in the core layer includes a polyamide resin (b) and the glass fibers (y), and a blend ratio (b/y) between the polyamide resin (b) and the glass fibers (y) is in a range of 35/65 to 60/40 in mass ratio, and
   wherein a melt viscosity $\eta a$ of the polyamide resin composition (A) to be measured under conditions of a temperature 30°C higher than the melting point of the polyamide resin composition (A) and a shearing speed of 1000 s$^{-1}$ and a melt viscosity $\eta b$ of the polyamide resin composition (B) to be measured under conditions of a temperature 30°C higher than the melting point of the polyamide resin composition (B) and a shearing speed of 1000 s$^{-1}$ satisfy a relational expression of

$$1 < (\log\eta a / \log\eta b) < 1.4.$$

2. The vibration damping device according to claim 1,
   wherein a content rate of the glass fibers (x) included in the polyamide resin composition (A) and a content rate of the glass fibers (y) included in the polyamide resin composition (B) satisfy a relational expression of

$$X \leq Y + 5.$$

3. The vibration damping device according to any of claims 1 or 2,
   wherein a volume ratio of the skin layers to the entire sandwiched molding is in a range of 40 to 70%.

FIG. 1

FIG. 2

FIG. 3

FIG. 4

<div align="center">

**INTERNATIONAL SEARCH REPORT**

</div>

| | International application No. |
|---|---|
| | PCT/JP2011/056094 |

**A. CLASSIFICATION OF SUBJECT MATTER**
*F16F1/36*(2006.01)i, *B32B25/08*(2006.01)i, *B32B27/34*(2006.01)i, *F16F1/38*(2006.01)i, *F16F15/08*(2006.01)i

According to International Patent Classification (IPC) or to both national classification and IPC

**B. FIELDS SEARCHED**

Minimum documentation searched (classification system followed by classification symbols)
F16F1/36, B32B25/08, B32B27/34, F16F1/38, F16F15/08

Documentation searched other than minimum documentation to the extent that such documents are included in the fields searched
| | | | |
|---|---|---|---|
| Jitsuyo Shinan Koho | 1922–1996 | Jitsuyo Shinan Toroku Koho | 1996–2011 |
| Kokai Jitsuyo Shinan Koho | 1971–2011 | Toroku Jitsuyo Shinan Koho | 1994–2011 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X<br>A | JP 2007-263241 A (Tokai Rubber Industries, Ltd.),<br>11 October 2007 (11.10.2007),<br>claims 1 to 5; paragraphs [0026] to [0035]; fig. 1 to 6<br>(Family: none) | 1,3<br>2 |
| X<br>A | JP 2007-177827 A (Tokai Rubber Industries, Ltd.),<br>12 July 2007 (12.07.2007),<br>claims 1 to 3; paragraphs [0022] to [0029]; fig. 1 to 4<br>(Family: none) | 1,3<br>2 |

| ☒ | Further documents are listed in the continuation of Box C. | ☐ | See patent family annex. |
|---|---|---|---|

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 27 May, 2011 (27.05.11) | 07 June, 2011 (07.06.11) |

| Name and mailing address of the ISA/ | Authorized officer |
|---|---|
| Japanese Patent Office | |
| Facsimile No. | Telephone No. |

Form PCT/ISA/210 (second sheet) (July 2009)

**INTERNATIONAL SEARCH REPORT**

| International application No. |
| --- |
| PCT/JP2011/056094 |

C (Continuation).    DOCUMENTS CONSIDERED TO BE RELEVANT

| Category* | Citation of document, with indication, where appropriate, of the relevant passages | Relevant to claim No. |
| --- | --- | --- |
| A | JP 2008-155581 A  (Tokai Rubber Industries, Ltd.),<br>10 July 2008 (10.07.2008),<br>entire text; fig. 1 to 5<br>(Family: none) | 1-3 |
| A | JP 2008-157410 A  (Tokai Rubber Industries, Ltd.),<br>10 July 2008 (10.07.2008),<br>entire text; fig. 1 to 4<br>(Family: none) | 1-3 |
| A | JP 2005-325922 A  (Tokai Rubber Industries, Ltd.),<br>24 November 2005 (24.11.2005),<br>entire text; fig. 1 to 3<br>(Family: none) | 1-3 |
| A | JP 5-329886 A  (Matsushita Electric Works, Ltd.),<br>14 December 1993 (14.12.1993),<br>paragraph [0008]; fig. 1 to 6<br>(Family: none) | 1-3 |
| A | JP 11-129284 A  (Mitsubishi Engineering-Plastics Corp.),<br>18 May 1999 (18.05.1999),<br>entire text; fig. 1<br>(Family: none) | 1-3 |
| A | JP 11-179756 A  (Toray Industries, Inc.),<br>06 July 1999 (06.07.1999),<br>entire text; fig. 1 to 2<br>(Family: none) | 1-3 |
| A | JP 2001-310325 A  (YKK Corp.),<br>06 November 2001 (06.11.2001),<br>entire text; fig. 1 to 2<br>(Family: none) | 1-3 |

Form PCT/ISA/210 (continuation of second sheet) (July 2009)

**EP 2 687 747 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2003214494 A